# FASCICULE DE BREVET EUROPEEN

(11) **EP 2 212 506 B1**
(45) Date de publication et mention de la délivrance du brevet: **09.03.2016**
(21) Numéro de dépôt: 08841358.8
(22) Date de dépôt: 09.10.2008
(51) Int. Cl.: B60J 1/20, E06B 5/20, B60J 1/17, B60R 13/08, G10K 11/168, F16F 15/02

(54) **VITRAGE A PROPRIETE D'AMORTISSEMENT VIBRO-ACOUSTIQUE AMELIORE, PROCEDE DE FABRICATION D'UN TEL VITRAGE ET PROCEDE DE PROTECTION ACOUSTIQUE DANS UN HABITACLE DE VEHICULE**
VERGLASUNG MIT VERBESSERTEM VIBROAKUSTISCHEM DÄMPFUNGSVERHALTEN, VERFAHREN ZUR HERSTELLUNG EINER DERARTIGEN VERGLASUNG UND SCHALLSCHUTZVERFAHREN FÜR DEN INSASSENRAUM EINES FAHRZEUGES
GLAZING HAVING IMPROVED VIBRO-ACOUSTIC DAMPING BEHAVIOUR, METHOD OF MANUFACTURING SUCH GLAZING, AND METHOD OF ACOUSTIC PROTECTION IN A VEHICLE PASSENGER COMPARTMENT

(30) Priorité: 26.10.2007 FR 0758622
(43) Date de publication de la demande: 04.08.2010
(73) Titulaire: Saint-Gobain Glass France, 92400 Courbevoie (FR)
(72) Inventeur: PAYOT, Sylvain, Saratoga Springs, NY 12866 (US); FOURNIER, David, F-60120 Breteuil (FR)
(74) Mandataire: Lucas, Francois
(86) Numéro de dépôt international: PCT/FR2008/051830
(87) Numéro de publication internationale: WO 2009/053620

(56) Documents cités:
- EP-A- 0 387 148
- WO-A-2004/012952
- DE-A1- 3 617 602
- DE-A1- 10 337 007
- FR-A- 2 877 881
- US-A- 4 490 942
- US-A- 4 778 028

## Description

La présente invention concerne un vitrage à propriété d'amortissement vibro-acoustique améliorée qui comporte un dispositif d'amortissement vibro-acoustique, ainsi qu'un procédé de réduction de la gêne acoustique et vibratoire dans un habitacle, en particulier un habitacle mobile tel qu'un véhicule, notamment un véhicule automobile.

Outre les véhicules automobiles ou autres types de véhicules tels que les camions, cars, matériels agricoles, l'invention s'applique à tous types d'engins de locomotion présentant un habitacle fermé ou sensiblement fermé, tels que les avions, les trains, les bateaux, les sous-marins...

Les vitrages associés aux véhicules, notamment les véhicules automobiles, sont pourvus de moyens d'amortissement vibro-acoustique qui servent à absorber les ondes vibratoires se propageant au travers du vitrage en vue d'améliorer le confort acoustique à l'intérieur des véhicules.

Dans un véhicule automobile, les sources de désagrément d'origine mécanique, thermique, de visibilité, etc... ont été peu à peu maîtrisées. Mais l'amélioration du confort acoustique reste toujours d'actualité.

Les bruits d'origine aérodynamique, c'est-à-dire créés par le frottement de l'air sur le véhicule en déplacement, ont pu, au moins en partie, être eux-mêmes traités à leur source : pour économiser l'énergie, les formes ont été modifiées en améliorant la pénétration dans l'air et en diminuant les turbulences qui sont elles-mêmes source de bruits. Parmi les parois d'un véhicule qui séparent la source de bruits aérodynamiques extérieure de l'espace intérieur où se trouve le passager, les vitrages sont évidemment les plus difficiles à traiter.

Il est à présent connu de proposer des vitrages feuilletés dont l'intercalaire en matière thermoplastique est choisi de manière adaptée pour présenter des propriétés améliorées d'amortissement vibro-acoustique.

Le brevet européen EP-B1-0 387 148 propose ainsi des vitrages feuilletés qui réalisant une bonne isolation contre les bruits en particulier d'origine aérodynamique, c'est-à-dire à haute fréquence, entre 800 et 10 000 Hz.

En outre, de tels vitrages feuilletés permettent d'éviter une chute brutale à la fréquence critique des pertes par transmission (transmission loss) qui sont représentatives de l'isolement acoustique. La fréquence critique est propre à la composition du vitrage (masse volumique et module d'Young des éléments constitutifs, épaisseurs) et correspond à une coïncidence spatiale et fréquentielle des ondes de flexion dans le vitrage et des ondes acoustique dans le fluide enveloppant le vitrage tel que l'air. Elle est typiquement aux environs de 4000 Hz pour un vitrage avoisinant les 3 mm d'épaisseur.

C'est à cette fréquence critique, qui est située dans la plage de fréquences particulièrement audibles par l'oreille humaine (entre 1000 et 6000 Hz), que les bruits peuvent donc être accrus. Il est donc souhaitable d'avoir une bonne performance d'isolement aux bruits à cette fréquence.

Une solution alternative (car certains vitrages ne sont pas feuilletés) ou complémentaire à l'utilisation de vitrages feuilletés à propriété d'amortissement vibro-acoustique peut consister à associer à la périphérie du vitrage et entre le vitrage et la carrosserie, un profilé à propriété d'amortissement vibro-acoustique qui est rendu solidaire du vitrage et de la carrosserie et qui consiste en une juxtaposition ou non de plusieurs matériaux amortissants.

De la demande de brevet WO 04/012952, on connaît un profilé qui, pour assurer une telle propriété d'amortissement vibro-acoustique, doit présenter une raideur linéique réelle équivalente K'_{eq} au moins égale à 25 MPa, en combinaison à un facteur de perte équivalent tanδ_{eq} au moins égal à 0,25. La raideur linéique équivalente est la raideur équivalente du profilé rapportée à un mètre linéaire de profilé, la raideur étant caractérisée par la rigidité (principalement le module d'Young pour un travail en traction-compression) des matériaux constituant le profilé et par la géométrie du profilé.

Dans ce type de profilé, seules sont prises en compte les contraintes et déformations subies par les matériaux selon un travail en traction-compression dans la direction normale au vitrage, le travail en cisaillement étant négligeable. En effet, la carrosserie est tellement rigide par rapport au profilé qu'elle ne se déforme pas et ne peut pas absorber l'énergie vibratoire. Seul le profilé se déforme de manière significative et dissipe de l'énergie mécanique par un travail en traction compression principalement.

Ce type de profilé amortissant, constituant également le joint périphérique du vitrage, convient donc car il assure la liaison entre le vitrage et la carrosserie. Cependant, tous les vitrages d'un véhicule ne sont pas fixés sur toute leur périphérie dans la carrosserie, certains tels que les vitrages latéraux ouvrants sont mobiles. Aussi cette configuration de joint périphérique assurant le rôle de moyen d'amortissement ne peut pas convenir pour ces derniers vitrages.

L'invention a donc pour but d'apporter à un vitrage, plus particulièrement à haute fréquence, un moyen d'amortissement vibro-acoustique qui soit alternatif ou complémentaire aux moyens existants tels que les vitrages feuilletés ou les joints périphériques de collage d'un vitrage.

Selon l'invention, le vitrage comporte au moins une feuille de verre et au moins un profilé d'amortissement vibro-acoustique qui est solidarisé avec au moins l'une des faces de la feuille de verre et qui comprend au moins un élément en matériau amortissant de facteur de perte supérieur à 0,2 et de module d'Young supérieur à 800 MPa à 20°C pour une fréquence particulière *fₚ* qui correspond à la fréquence critique du vitrage à plus ou moins 30 % près. Le vitrage est également caractérisé en ce que le profilé n'est associé à aucun autre dispositif à l'opposé de la feuille de verre.

Le module d'Young du matériau amortissant et son facteur de perte sont mesurés à l'aide d'un visco-analyseur.

De manière connue, la fréquence critique de vutrage est donnée par la relation f_{c}≈11,6/h, avec h l'épaisseur du vitrage en m.

Ainsi, le vitrage fournit des propriétés d'amortissement vibro-acoustique, quelle que soit son association avec la carrosserie du véhicule et indépendamment de la carrosserie ; le matériau amortissant joue pleinement son rôle de dissipateur de l'énergie vibratoire, mais au lieu de travailler en traction-compression dans un plan normal au vitrage, le profilé travaille en traction-compression dans le plan du vitrage. Ce travail en traction-compression dans le plan du vitrage, qu'on préfère plutôt nommer travail en élongation, s'avère être étonnamment efficace.

Les inventeurs ont ainsi mis en évidence que l'association d'un profilé avec le vitrage pour dissiper l'énergie vibratoire est d'autant plus efficace que le matériau du profilé est amortissant (ce qui est lié au facteur de perte) et surtout que le profilé est rigide (ce qui est lié au module d'Young du ou des matériaux constituant le profilé) pour assurer un travail en élongation.

De préférence, le profilé est agencé à proximité du bord ou au bord du vitrage. Il ne forme pas de joint d'étanchéité. Il s'étend de préférence sur au plus la longueur d'un côté du vitrage. Sa géométrie peut également être adaptée à la forme du vitrage. Le profilé pourra ainsi avoir une forme classique en rectangle, ou plus complexe, telle qu'un trapèze par exemple.

Selon une caractéristique, le profilé peut comporter une pluralité d'éléments en matériau amortissant.

Selon une autre caractéristique, le vitrage peut comporter plusieurs profilés associés à la même face du vitrage et/ou aux deux faces opposées du vitrage.

Selon une variante de réalisation, le profilé comporte au moins un élément en matériau amortissant, et un élément intercalaire rigide qui est agencé entre l'élément en matériau amortissant et le vitrage, l'élément intercalaire rigide présentant un facteur de perte inférieur à 0,2 et un module d'Young au moins deux fois supérieur à celui du matériau amortissant à 20°C et pour la fréquence particulière choisie.

Selon un exemple de réalisation, le matériau amortissant est un bitumineux. Il peut également s'agir d'un polymère carboné chargé.

Avantageusement, le vitrage de l'invention est logé dans la carrosserie d'un véhicule, notamment un véhicule automobile, le profilé étant caché à la vue.

Le vitrage est plus particulièrement un vitrage latéral ouvrant.

L'invention a également pour but un procédé de fabrication d'un vitrage en vue de la réduction de la gêne acoustique et vibratoire dans un habitacle de véhicule, notamment de véhicule automobile, comportant un tel vitrage, le procédé consistant à associer au vitrage au moins un profilé d'amortissement vibro-acoustique, caractérisé en ce que :
- on fournit un profilé comportant au moins un élément en matériaux amortissant présentant un facteur de perte supérieur 0,2, et un module d'Young supérieur à 800 MPa à 20°C pour une fréquence particulière correspondant à la fréquences critique du vitrage à plus ou moins 30 % près;
- on solidarise le profilé à au moins l'une des faces du vitrage.

La solidarisation est faite par tous moyens adaptés, de préférence par collage à l'aide d'une colle compatible avec le verre et le matériau du profilé.

Le profilé peut comprendre sur l'une de ses faces, celle destinée à sa solidarisation des moyens de collage du type scotch double-face.

Enfin l'invention a également trait à un procédé de protection acoustique dans un habitacle de véhicule, notamment de véhicule automobile, comportant un vitrage d'amortissement vibro-acoustique amélioré qui comprend au moins un profilé d'amortissement vibro-acoustique, caractérisé en ce qu'il consiste à utiliser un profilé comportant au moins un élément en matériau amortissant de facteur de perte supérieur à 0,2, et de module d'Young supérieur à 800 MPa à 20°C pour une fréquence particulière correspondant à la fréquence critique du vitrage à plus ou moins 30 % près, le profilé étant solidarisé à l'une des faces du vitrage.

Pour les procédés de fabrication ou de protection acoustique, on utilisera avantageusement un vitrage de l'invention tel que décrit ci-dessus.

D'autres détails et avantages de l'invention vont à présent être décrits, en regard des dessins annexés sur lesquels :
- la figure 1 est une vue en perspective d'un vitrage pourvu d'un profilé selon l'invention ;
- la figure 2 est une vue partielle en coupe du vitrage de la figure 1;
- les figures 3 à 6 sont des vues partielles en coupe de plusieurs variantes de réalisation de la figure 1;
- la figure 7 est une vue partielle en perspective d'une autre variante dé vitrage, pourvu ici de deux profilés selon l'invention ;
- La figure 8 présente une vue en perspective d'un vitrage pourvu d'une variante supplémentaire de profilé.
- la figure 9 montre des courbes comparatives d'isolement acoustique entre un vitrage nu et un vitrage pourvu d'un profilé de l'invention.

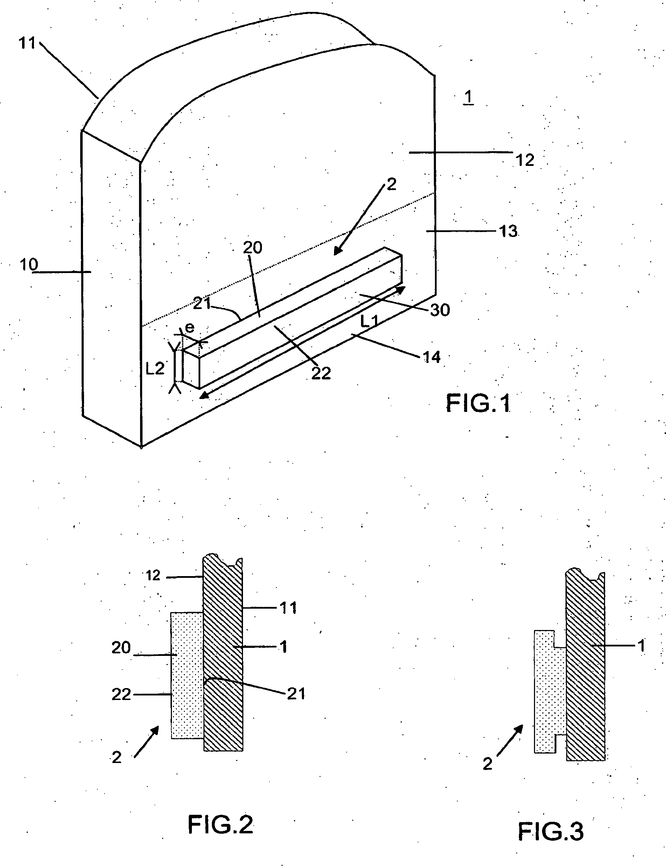

Les figures 1 à 8 ne sont pas des vues à l'échelle pour en faciliter la compréhension.

Les figures 1 et 2 illustrent un vitrage 1 muni des moyens d'amortissement vibro-acoustique de l'invention formés par au moins un profilé 2.

Le vitrage 1 est destiné à être logé dans une carrosserie de véhicule, tel qu'un véhicule automobile, par exemple dans un caisson de portière pour former une vitre latérale, avantageusement un vitrage ouvrant. Ce vitrage est ici monolithique et comporte donc une feuille de verre 10, mais il pourrait par exemple être feuilleté et comprendre une feuille intercalaire plastique prise en sandwich entre deux feuilles de verre.

Le vitrage 1 présente deux faces opposées 11 et 12, l'une est destinée à être en regard de l'intérieur du véhicule, tandis que l'autre sera tournée vers l'environnement extérieur.

De plus, le vitrage 1 comporte une partie marginale 13 qui est située au niveau d'un côté 14 et délimitée par les pointillés sur la figure 1. Cette partie est appelée bande basse dans le cas d'un vitrage ouvrant latéral. Cette partie marginale est destinée à ne pas être visible car devant être logée dans la carrosserie pour la fixation du vitrage.

Le profilé est disposé à proximité du bord du vitrage sans former un joint d'étanchéité. Il est de préférence agencé le long d'un seul côté du vitrage.

Le profilé 2 comporte un élément 20 en matériau amortissant.

L'élément en matériau amortissant 20 présente un facteur de perte supérieur à 0,2, et un module d'Young supérieur à 800 MPa, à 20°C et avantageusement pour une fréquence particulière *fₚ* du vitrage qui correspond à la fréquence critique du vitrage, ou à plus ou moins 30 % près de cette fréquence critique. Typiquement, la fréquence critique d'un vitrage est comprise entre 2000 et 5000 Hz selon en particulier l'épaisseur du vitrage.

En effet, il se trouve que pour les véhicules, en particulier les véhicules automobiles, la plage de fréquences pour laquelle on souhaite obtenir un isolement amélioré correspond à la plage de fréquences située autour de la fréquence critique du vitrage. On choisira donc avantageusement une fréquence particulière égale à plus ou moins 30% près, à la fréquence critique du vitrage (*fₚ* =*f_{c}* ±30%). C'est en effet autour de cette fréquence critique que la transmission des bruits depuis l'extérieur du véhicule, au travers du vitrage, est la Plus marquée, se traduisant en termes de mesures par une chute prononcée de l'isolement acoustique. L'invention est donc plus particulièrement portée sur cette plage fréquentielle pour améliorer l'amortissement vibro-acoustique d'un vitrage. Ainsi, la fréquence particulière *fₚ* pourra plus particulièrement correspondre à la fréquence critique du vitrage.

On note que selon l'invention, plus la surface de contact du profilé avec le vitrage sera grande, meilleur sera l'amortissement.

Par ailleurs, plus l'épaisseur e du profilé sera grande et plus celui-ci sera efficace. On préfèrera à masse constante du profilé, augmenter l'épaisseur e du profilé plutôt que sa surface.

Pour exemple, selon la figure 1, on pourra fixer sur un vitrage de 3,85 mm d'épaisseur avec des dimensions de 800 mm x 500 mm et à environ 25 mm du bord du vitrage, un profilé présentant une longueur L1 de 600 mm et une largueur L2 de 100 mm, ainsi qu'une épaisseur e de 5 mm.

L'élément amortissant 20 comprend une face 21 de solidarisation avec l'une des faces 12 du vitrage et une face opposée 22 libre.

La solidarisation avec le vitrage est réalisée par des moyens adhésifs compatibles avec chacun des matériaux constitutifs de l'élément amortissant et du vitrage. Les moyens adhésifs sont de type connu, par exemple des moyens auto-adhésifs ou constitués d'une colle activée par apport thermique.

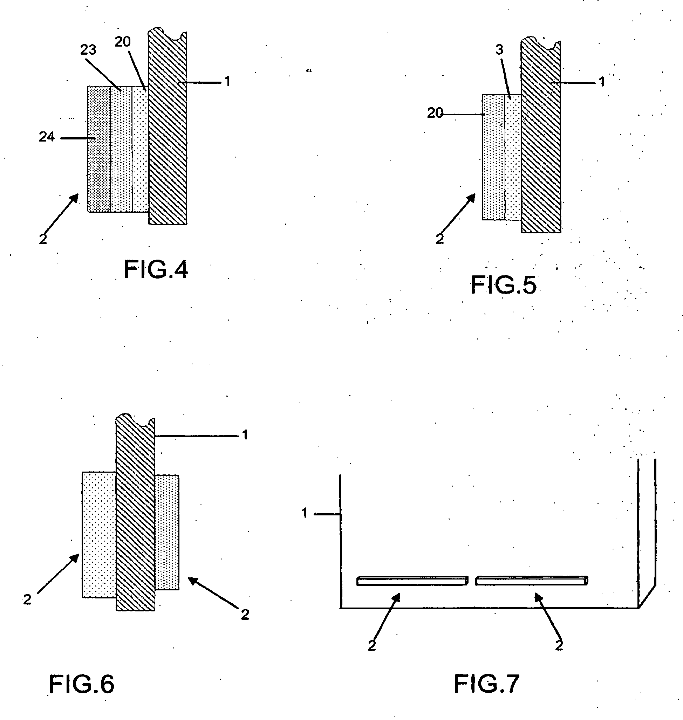

Le profilé 2 peut être constitué d'un unique élément amortissant 20 ou d'une superposition d'une pluralité d'éléments amortissants 20, 23, 24 (figure 4). Chaque matériau de chaque élément présente les caractéristiques suivantes, un facteur de perte supérieur à 0,2, et un module d'Young supérieur à 800 MPa, à 20°C et à une fréquence particulière *fₚ* du vitrage qui correspond à la fréquence critique du vitrage à plus ou moins 30 % près.

La figure 5 illustre une autre variante de réalisation de l'invention. Le profilé 2 comporte un élément amortissant 20 et un élément intercalaire rigide non amortissant 3, l'élément intercalaire rigide non amortissant étant pris en sandwich entre l'élément amortissant 20 et le vitrage. De préférence, il présente la même surface d'association avec le vitrage qu'avec l'élément amortissant.

L'élément rigide non amortissant est constitué d'un matériau qui présente un facteur de perte inférieur à 0,2, et un module d'Young supérieur à 1600 MPa. On peut par exemple utiliser du verre, du polycarbonate, par exemple avec une épaisseur de 3 mm. Les moyens de solidarisation entre les différents éléments sont adaptés pour être compatibles avec les matériaux constitutifs desdits éléments.

La figure 6 illustre une autre variante de réalisation. Au vitrage 1 sont associés deux profilés, avec un profilé respectivement sur chaque face 11 et 12 du vitrage, lorsque cette variante de réalisation est compatible avec l'encombrement de l'installation destinée à accueillir le vitrage.

Il est également possible d'envisager sur une même face du vitrage l'association d'une pluralité de profilés 2 qui peuvent être juxtaposés ou non, aboutés ou non (figuré 7).

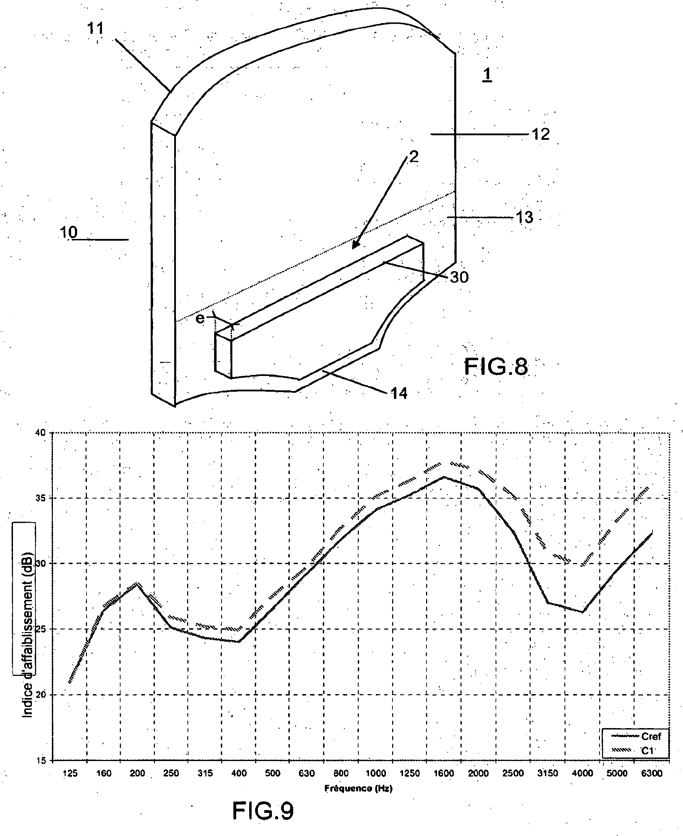

Enfin, il est possible d'utiliser un profilé ayant une géométrie non-rectangulaire (figure 8). Cette géométrie permet de s'adapter au cas d'un vitrage dont l'extrémité basse, généralement appelée bande basse, n'est pas rectiligne mais courbe.

A titre d'exemples nullement limitatifs, le tableau ci-dessous cite plusieurs matériaux amortissants pour le profilé à associer au vitrage selon l'invention, le facteur de perte et le module d'Young sont donnés à 20°C et à la fréquence de 3100 Hz (fréquence critique d'un vitrage de 3,85 mm d'épaisseur), ces valeurs étant mesurées à l'aide d'un visco-ananlyseur:

| Nom commercial | Type de matériau | Module d'Young *E*'*ᵥ* (MPa) | Facteur de perte *tan* δ |
|---|---|---|---|
| Stickson de la société Akdev Soprema | Bitumineux | 900 | 0,38 |
| Abedal de la société Siplast | Bitumineux | 1300 | 0,25 |
| VB10 de la société Decibel france | Bitumineux | 1200 | 0,27 |
| ISODAMP C1100-12 de la société EARsc | Polymère à base vinylique | 900 | 0,35 |

Pour démontrer l'efficacité des moyens amortissants de l'invention, on a mis en évidence l'atténuation du niveau vibratoire d'un vitrage, muni des moyens amortissants par rapport au même vitrage, nu, sur une gamme de fréquences de 125 à 6300 Hz comprenant la fréquence critique du vitrage à 3100Hz.

Un vitrage muni des moyens amortissants de l'invention excité par voie aérienne présente des niveaux vibratoires inférieurs au vitrage nu car l'énergie vibratoire du vitrage est dissipée au travers du profilé 2. Dès lors, les niveaux de pression dans l'habitacle sont plus faibles, et en conséquence les bruits sont atténués.

La figure 9 montre ainsi des courbes comparatives d'indice d'affaiblissement obtenues avec d'une part, un vitrage pourvu des moyens amortissants de l'invention, et d'autre part, un vitrage équivalent ne comportant pas les moyens de l'invention.

Le vitrage servant de test est un vitrage plan d'épaisseur 3,85 mm et de dimensions 800 mm x 500 mm. Sa fréquence critique avoisine ainsi les 3100 Hz.

La courbe Cref correspond au vitrage nu. La courbe C1 correspond au vitrage pourvu du profilé 2. Le profilé est rectangulaire et a pour dimensions : longueur L1 de 600 mm, largeur L2 de 100 mm, et épaisseur e de 5,2 mm. Le matériau du profilé est une bande de Stickson de la société Akdev Soprema (cf. tableau ci-dessus). Ce profilé est vendu dans le commerce avec une bande d'adhésif pré-appliquée et compatible avec le verre pour son collage.

Ce vitrage est installé dans une ouverture pratiquée entre deux chambres réverbérantes. Il est maintenu à ses bords à l'aide de cornières munies de bandes de mousse permettant d'assurer l'étanchéité du dispositif et de recréer des conditions de montage proches du cas d'un vitrage ouvrant latéral. L'indice d'affaiblissement acoustique R par tiers d'octave a ainsi été mesuré, selon la norme ISO 140-3, pour les fréquences allant de 125 à 6300 Hz. Ces mesures sont réalisées à la température ambiante de 18°C.

On met en évidence en regard des courbes de la figure 9 qu'on arrive à améliorer l'affaiblissement acoustique du vitrage au niveau de la fréquence critique (écart de 3,8 dB sur le tiers d'octave centré sur 3150 Hz).

Par conséquent, si conformément au but premier de l'invention, on parvient à dissiper un maximum d'énergie vibratoire dans la région de la fréquence critique du vitrage (sur une plage s'étalant de moins 30% à plus 30% de la fréquence critique), l'invention permet également d'assurer un bon amortissement vibro-acoustique sur une plus large gamme de fréquences, y compris aux basses et moyennes fréquences. On voit en effet sur la figure 9 que la courbe C1 d'isolement relative au vitrage de l'invention est au-dessus de la courbe Cref correspondant au vitrage nu.

## Revendications

1. Vitrage (1) à propriété d'amortissement vibro-acoustique améliorée comportant au moins une feuille de verre (10) et au moins un profilé d'amortissement vibro-acoustique (2) qui est solidarisé avec au moins l'une des faces de la feuille de verre et qui comprend au moins un élément en matériau amortissant (20), **caractérisé en ce que** le profilé (2) n'est associé à aucun autre dispositif à l'opposé de la feuille de verre, et **en ce que** menu en matériau amortissant présente un facteur de perte supérieur à 0,2 et un module d'Young supérieur à 800 MPa, à 20°C pour une fréquence particulière *fₚ* correspondant à la fréquence critique du vitrage à plus ou moins 30 % près.

2. Vitrage selon la revendication précédente, **caractérisé en ce que** le profilé (2) est agencé à proximité du bord ou au bord du vitrage.

3. Vitrage selon l'une quelconque des revendications précédentes, **caractérisé en ce que** le profilé (2) s'étend sur au plus la longueur d'un côté du vitrage.

4. Vitrage selon l'une quelconque des revendications précédentes, **caractérisé en ce que** le profilé (2) comporte une pluralité d'éléments en matériau amortissant (20, 23, 24).

5. Vitrage selon l'une quelconque des revendications précédentes, **caractérisé en ce qu'**il comporte plusieurs profilés (2) associés à la même face du vitrage et/ou aux deux faces opposées du vitrage.

6. Vitrage selon l'une quelconque des revendications précédentes, **caractérisé en ce que** le profilé (2) comporte au moins un élément en matériau amortissant (20), et un élément intercalaire (3) rigide qui est agencé entre l'élément en matériau amortissant (20) et le vitrage, l'élément intercalaire rigide présentant un module d'Young supérieur à 1600 MPa et un facteur de perte inférieur à 0,2, à 20°C pour la fréquence particulière choisie *fₚ*.

7. Vitrage selon l'une quelconque des revendications précédentes, **caractérisé en ce que** le profilé comprend sur l'une de ses faces, celle destinée à sa solidarisation avec le vitrage, des moyens de collage du type scotch double-face.

8. Vitrage selon l'une quelconque des revendications précédentes, **caractérisé en ce qu'**il est logé dans la carrosserie d'un véhicule, notamment un véhicule automobile, le profilé étant caché à la vue.

9. Vitrage selon l'une quelconque des revendications précédentes, **caractérisé en ce qu'**il s'agit d'un vitrage latéral ouvrant.

10. Procédé de fabrication d'un vitrage (1) en vue de la réduction de la gêne acoustique et vibratoire dans un habitacle de véhicule, notamment de véhicule automobile, comportant un tel vitrage, le procédé consistant à associer au vitrage au moins un profilé d'amortissement vibro-acoustique (2), **caractérisé en ce que** :
- on fournit un profilé comportant au moins un élément en matériau amortissant présentant un facteur de perte supérieur à 0,2, et un module d'Young un module d'Young supérieur à 800 MPa à 20°C pour une fréquence particulière correspondant à la fréquence critique du vitrage, à plus ou moins 30 % près ;
- on solidarise le profilé à au moins l'une des faces du vitrage.

11. Procédé de fabrication d'un vitrage selon la revendication 10, **caractérisé en ce que** la fréquence particulière *fₚ* correspond à la fréquence, critique du vitrage, ou à plus ou moins 30 % près de cette fréquence critique.

12. Procédé de fabrication d'un vitrage selon la revendication 10 ou 11, **caractérisé en ce qu'**il utilise un vitrage selon l'une des revendications 2 à 9.

13. Procédé de protection acoustique dans un habitacle de véhicule, notamment de véhicule automobile, comportant un vitrage (1) d'amortissement vibro-acoustique amélioré qui comprend au moins un profilé (2) d'amortissement vibro-acoustique, **caractérisé en ce qu'**il consiste à utiliser un profilé comportant au moins un élément en matériau amortissant (20) de facteur de perte supérieur à 0,2, et de module d'Young supérieur à 800 MPa à 20°C et pour une fréquence particulière correspondant à la fréquence critique du vitrage, à plus ou moins 30 % près, le profilé étant solidarisé à l'une des faces du vitrage.

14. Procédé de protection acoustique dans un habitacle de véhicule selon la revendication 13, **caractérisé en ce qu'**il utilise un vitrage selon l'une des revendications 2 à 9.

## Patentansprüche

1. Verglasung (1) mit verbessertem vibro-akustischen Dämpfungsvermögen mit mindestens einer Glasscheibe (10) und mindestens einem vibro-akustischen Dämpfungsprofil (2), das mit mindestens einer der Seiten der Glasscheibe fest verbunden ist und das mindestens ein Element aus Dämpfungsmaterial (20) umfasst, **dadurch gekennzeichnet, dass** das Profil (2) mit keiner anderen Vorrichtung verbunden ist, die zu der Glasscheibe entgegengesetzt ist, und dass das Element aus Dämpfungsmaterial einen Verlustfaktor von mehr als 0,2 und einen Young-Modul von mehr als 800 MPa bei 20 °C bei einer speziellen Frequenz *fₚ* aufweist, die der kritischen Frequenz der Verglasung zu mehr oder weniger 30 % entspricht.

2. Verglasung nach dem vorhergehenden Anspruch, **dadurch gekennzeichnet, dass** das Profil (2) in der Nähe des Randes oder am Rand der Verglasung vorgesehen ist.

3. Verglasung nach einem der vorhergehenden Ansprüche, **dadurch gekennzeichnet, dass** das Profil (2) sich über höchstens die Länge einer Seite der Verglasung erstreckt.

4. Verglasung nach einem der vorhergehenden Ansprüche, **dadurch gekennzeichnet, dass** das Profil (2) eine Vielzahl von Elementen aus Dämpfmaterial (20, 23, 24) aufweist.

5. Verglasung nach einem der vorhergehenden Ansprüche, **dadurch gekennzeichnet, dass** sie mehrere Profile (2) aufweist, die mit der gleichen Seite der Verglasung und/oder mit den zwei entgegengesetzten Seiten der Verglasung verbunden sind.

6. Verglasung nach einem der vorhergehenden Ansprüche, **dadurch gekennzeichnet, dass** das Profil (2) mindestens ein Element aus Dämpfmaterial (20) und ein starres Zwischenelement (3) aufweist, das zwischen dem Element aus Dämpfmaterial (20) und der Verglasung vorgesehen ist, wobei das Zwischenelement einen Youngmodul von mehr als 1.600 mPa und einen Verlustfaktor von weniger als 0,2 bei 20 °C bei der gewählten speziellen Frequenz *fₚ* aufweist.

7. Verglasung nach einem der vorhergehenden Ansprüche, **dadurch gekennzeichnet, dass** das Profil auf einer seiner Seiten, der, die zu seiner festen Verbindung mit der Verglasung bestimmt ist, Klebemittel des Typs doppelseitiges Klebeband umfasst.

8. Verglasung nach einem der vorhergehenden Ansprüche, **dadurch gekennzeichnet, dass** sie in der Karosserie eines Fahrzeugs, insbesondere eines Kraftfahrzeugs, aufgenommen ist, wobei das Profil von der Sicht verborgen ist.

9. Verglasung nach einem der vorhergehenden Ansprüche, **dadurch gekennzeichnet, dass** es sich um eine bewegliche Seitenverglasung handelt.

10. Verfahren zum Herstellen einer Verglasung (1) zur Verringerung der Lärm- und Vibrationsbelästigung in einem Fahrgastinnenraum eines Fahrzeugs, insbesondere eines Kraftfahrzeugs, mit einer derartigen Verglasung, wobei das Verfahren darin besteht, mit der Verglasung mindestens ein vibro-akustisches Dämpfungsprofil (2) zu verbinden, **dadurch gekennzeichnet, dass**
- ein Profil mit mindestens einem Element aus Dämpfungsmaterial bereitgestellt wird, das einen Verlustfaktor von mehr als 0,2 und einen Young-Modul von mehr als 800 MPa bei 20 °C bei einer speziellen Frequenz aufweist, die der kritischen Frequenz der Verglasung entspricht, zu mehr oder weniger 30 %;
- das Profil mit mindestens einer der Seiten der Verglasung fest verbunden wird.

11. Verfahren zum Herstellen einer Verglasung nach Anspruch 10, **dadurch gekennzeichnet, dass** die spezielle Frequenz *fₚ* der kritischen Frequenz der Verglasung entspricht, oder zu mehr oder weniger 30 % dieser kritischen Frequenz.

12. Verfahren zum Herstellen einer Verglasung nach Anspruch 10 oder 11, **dadurch gekennzeichnet, dass** es eine Verglasung nach einem der Ansprüche 2 bis 9 verwendet.

13. Verfahren zum Lärmschutz in einem Fahrgastinnenraum eines Fahrzeugs, insbesondere eines Kraftfahrzeugs, mit einer Verglasung (1) mit verbesserter vibro-akustischer Dämpfung, die mindestens ein vibro-akustisches Dämpfungsprofil (2) umfasst, **dadurch gekennzeichnet, dass** es darin besteht, ein Profil zu verwenden mit mindestens einem Element aus Dämpfmaterial (20) mit einem Verlustfaktor von mehr als 0,2 und einem Young-Modul von mehr als 800 MPa bei 20 °C und bei einer speziellen Frequenz, die der kritischen Frequenz der Verglasung entspricht, zu mehr oder weniger 30 %, wobei das Profil mit einer der Seiten der Verglasung fest verbunden ist.

14. Verfahren zum Lärmschutz in einem Fahrgastinnenraum eines Fahrzeugs nach Anspruch 13, **dadurch gekennzeichnet, dass** es eine Verglasung nach einem der Ansprüche 2 bis 9 verwendet.

## Claims

1. A glazing unit (1) having an improved vibroacoustic damping property having at least one sheet of glass (10) and at least one vibroacoustic damping strip (2) which is attached to at least one of the faces of the glass sheet and that comprises at least one component (20) made of damping material, **characterized in that** the strip (2) is not joined to any other device on the opposite side from the glass sheet and **in that** the component made of damping material has a loss factor greater than 0.2 and a Young's modulus greater than 800 MPa, at 20°C for a particular frequency *fₚ* corresponding to the critical frequency of the glazing unit to within plus or minus 30%.

2. The glazing unit as claimed in the preceding claim, **characterized in that** the strip (2) is arranged in the vicinity of the edge or at the edge of the glazing unit.

3. The glazing unit as claimed in any one of the preceding claims, **characterized in that** the strip (2) extends over at most the length of one side of the glazing unit.

4. The glazing unit as claimed in any one of the preceding claims, **characterized in that** the strip (2) comprises a plurality of components (20, 23, 24) made of a damping material.

5. The glazing unit as claimed in any one of the preceding claims, **characterized in that** it comprises several strips (2) joined to the same face of the glazing unit and/or to the two opposite faces of the glazing unit.

6. The glazing unit as claimed in any one of the preceding claims, **characterized in that** the strip (2) comprises at least one component (20) made of damping material, and one rigid interlayer component (3) that is arranged between the damping material component (20) and the glazing unit, the rigid interlayer component having a Young's modulus greater than 1600 MPa and a loss factor of less than 0.2 at 20°C for the particular frequency chosen *fₚ*.

7. The glazing unit as claimed in any one of the preceding claims, **characterized in that** the strip comprises on one of its faces, the face intended for attachment to the glazing unit, bonding means of the double-sided adhesive tape type.

8. The glazing unit as claimed in any one of the preceding claims, **characterized in that** it is housed in the bodywork of a vehicle, especially a motor vehicle, the strip being hidden from view.

9. The glazing unit as claimed in any one of the preceding claims, **characterized in that** it is an opening side glazing unit.

10. A process for manufacturing a glazing unit (1) with a view to reducing the acoustic and vibration disturbance in a passenger compartment of a vehicle, in particular a motor vehicle, comprising such a glazing unit, the process consisting in joining to the glazing unit at least one vibroacoustic damping strip (2), **characterized in that**:
- a strip is provided that has at least one damping material component having a loss factor greater than 0.2 and a Young's modulus greater than 800 MPa at 20°C for a particular frequency corresponding to the critical frequency of the glazing unit, to within plus or minus 30%; and
- the profile is attached to at least one of the faces of the glazing unit.

11. The process for manufacturing a glazing unit as claimed in claim 10, **characterized in that** the particular frequency *fₚ* corresponds to the critical frequency of the glazing unit, or to within plus or minus 30% of this critical frequency.

12. The process for manufacturing a glazing unit as claimed in claim 10 or 11, **characterized in that** it uses a glazing unit as claimed in one of claims 2 to 9.

13. A process for acoustic protection in a passenger compartment of a vehicle, in particular a motor vehicle, comprising a glazing unit (1) of improved vibroacoustic damping that comprises at least one vibroacoustic damping strip (2), **characterized in that** it consists in using a strip comprising at least one damping material component (20) having a loss factor greater than 0.2 2 and a Young's modulus greater than 800 MPa at 20°C and for a particular frequency corresponding to the critical frequency of the glazing unit, to within plus or minus 30%, the strip being attached to one of the faces of the glazing unit.

14. The process for acoustic protection in a vehicle passenger compartment as claimed in claim 13, **characterized in that** it uses a glazing unit as claimed in one of claims 2 to 9.
